Europäisches Patentamt

European Patent Office

Office européen des brevets

(19)

(11) Publication number: **0 083 381**
**A1**

(12) **EUROPEAN PATENT APPLICATION**

(21) Application number: **81305801.3**

(22) Date of filing: **09.12.81**

(51) Int. Cl.³: **H 02 G 3/12**

(43) Date of publication of application: **13.07.83** Bulletin 83/28

(84) Designated Contracting States: **AT BE CH DE FR IT LI LU NL SE**

(71) Applicant: **Benson, Mark Edwin, Old Pages Cottage Main Street, Maids Moreton Buckinghamshire (GB)**

(72) Inventor: **Benson, Mark Edwin, Old Pages Cottage Main Street, Maids Moreton Buckinghamshire (GB)**

(74) Representative: **Burrows, Anthony Gregory et al, Haseltine Lake & Co. Hazlitt House 28 Southampton Buildings Chancery Lane, London, WC2 1AT (GB)**

(54) **Electrical conduit or mechanical pipe spacemaker protection cap device for use within concrete walls during concrete forming process.**

(57) A tool for use in the construction industry to form a space around conduits or pipes routed through concrete or other material structures.

This tool is primarily conical in shape (A) and formed to accept different sized conduits or pipes (B) into the smaller end with the larger planar end being located onto shutters (C) used when forming concrete structures. The tool is temporarily locked in postion using a screw (D) and on removing both screw and shutter, the tool can be removed affording an access space for continuing the conduit or pipe route and also cable pulling.

The tool is useable where adaptors are separately employed. Alternative rectangular or square "Box-Like" devices (F) can be used there it is required to afford like location, protection and extension of conduits or pipes and also afford access for cable pulling and for connection of conduit and cables to either recessed or surfaced mounted proprietary electrical units.

I, MARK BENSON A BRITISH SUBJECT OF OLDE PAGES COTTAGE MAIN STREET MAIDS MORETON BUCKS DO HEREBY DECLARE THE INVENTION FOR WHICH I PRAY THAT A PATENT MAY BE GRANTED ME AND THE METHOD BY WHICH IT IS TO BE PERFORMED TO BE PARTICULARLY DESCRIBED IN AND BY THE FOLLOWING STATEMENT.

THE OBJECT OF THE INVENTION IS TO PROVIDE MEANS AND METHODS OF FORMING BOTH PERMANENT OR TEMPORARY SPACE AND ALSO TEMPORARY PROTECTION OF ELECTRICAL CONDUIT AND MECHANICAL PIPE REQUIRED TO BE ROUTED AND TEMPORARILY OR PERMANENTLY TERMINATED WITHIN WALLS OR SLABS FORMED FROM SUCH MATERIAL AS CONCRETE.

THE PRESENT INVENTION IS CONCERNED WITH THE CONSTRUCTION OF A PLASTIC OR OTHER MATERIAL SPACEMAKER DEVICE (A) WHICH IS SO SHAPED AS TO AFFORD EASE AND STRENGTH OF MANUFACTURE MINIMUM USE OF SPACE WITHIN A WALL OR SLAB AND PROVIDES RELATIVE EASE OF REMOVAL AFTER INSTALLATION WHERE IT IS INTENDED TO FURTHER EXTEND THE CONDUIT OR PIPE WHICH ROUTES WITHIN THE ONGOING SECTIONS OF SLAB OR WALL BEING FORMED ON SITE OR IN A FACTORY.

WHILST THE ABOVEMENTIONED DEVICE AND INVENTION EMBODIES THE PRINCIPLE CONCEPT AND IS OUTLINED IN SOME DETAIL ON THE ENCLOSED DRAWINGS NAMELY FIGURE NUMBERS 1 AND 2 IT SHOULD BE NOTED THAT ITS APPLICATION IS OF USE WHERE SUCH SPECIFIC MATERIALS AS BRITISH, AMERICAN AND EUROPEAN STANDARD PROPRIETARY CONDUIT, PIPE AND RELATED COUPLING JOINT CONNECTIONS ARE EMPLOYED WITHIN THE BUILDING CONSTRUCTION AND ALLIED INDUSTRIES.

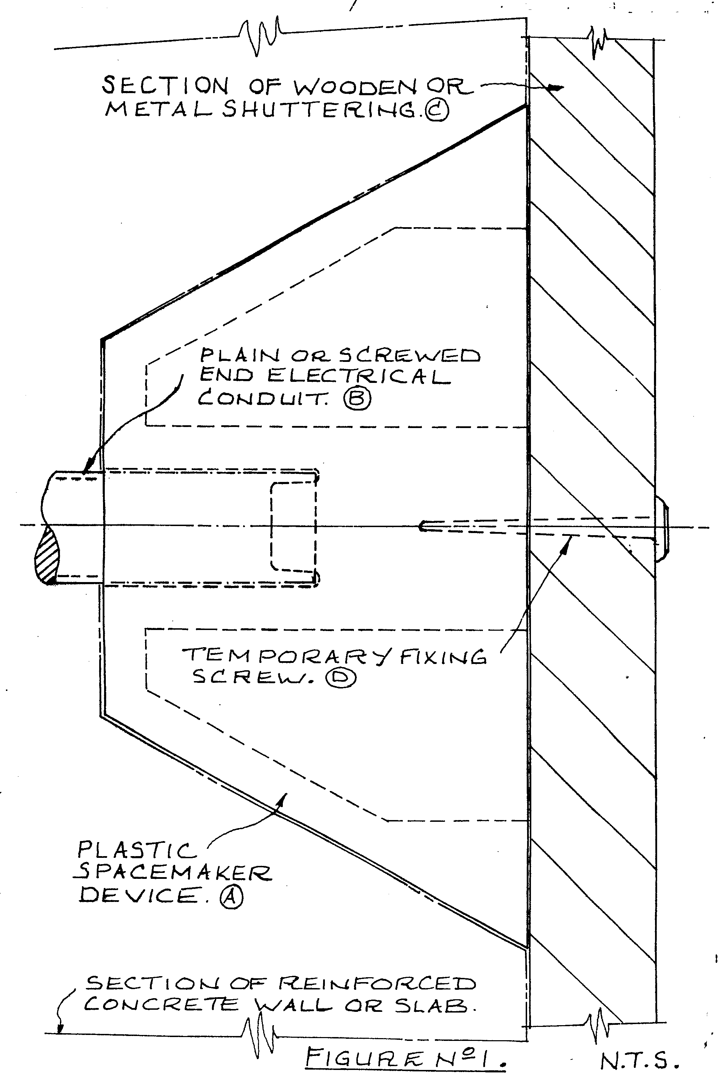

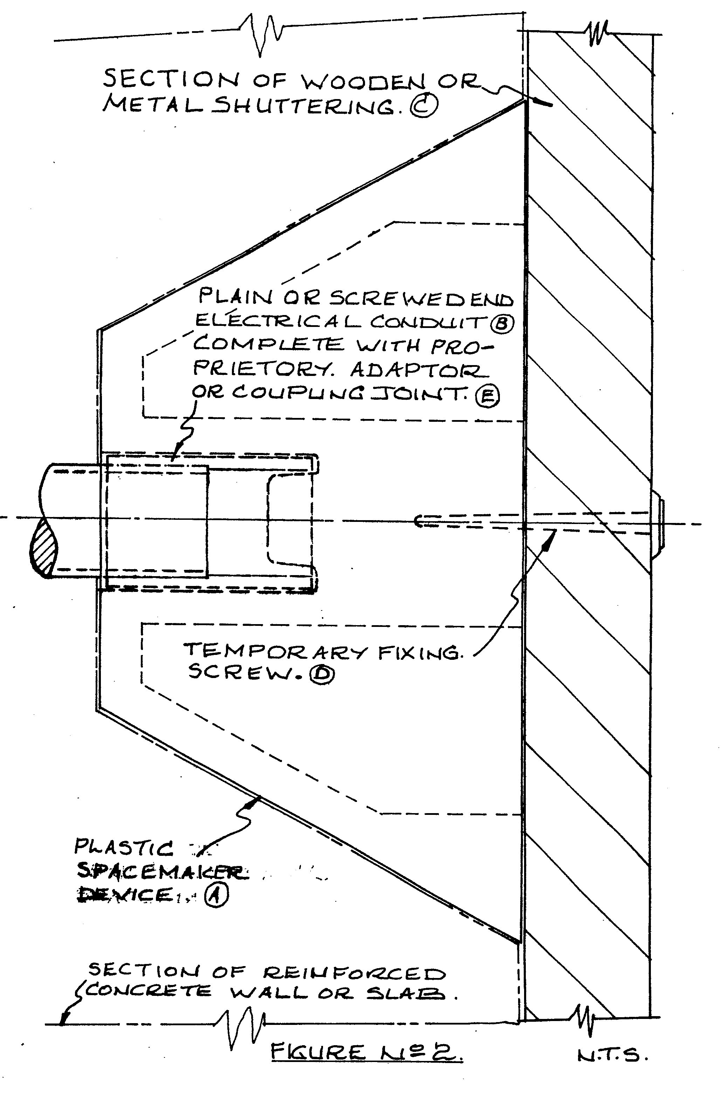

WITH PARTICULAR REFERENCE TO FIGURES 1 AND 2 THEIR SIMILARITY IS THE USE OF THE SPACEMAKER DEVICE (A), CONICAL IN FORM, WHICH HAS ONE END FITTED TO A CONDUIT (B) FORMING A CAP AND THEREBY PROTECTING THE CONDUIT FROM INGRESS OF SUCH MATERIAL AS CONCRETE BEING USED IN THE FORMATION OF THE WALL, SLAB, OR STRUCTURE.

THE DEVICE IS SO LOCATED AS TO BE PLACED WITH THE OPPOSITE END FLUSH WITH THE PLAMAR FORMWORK (C) OR SHUTTER (C) AND FIXED WITH A TEMPORARY SCREW (D).

WHERE FIGURES 1 AND 2 ARE DISSIMILAR IS THE EMPLOYMENT OF A

0083381

SPACEMAKER DEVICE WHICH HAS BEEN CONSTRUCTED TO ACCOMMODATE BEING FITTED TO AND OVER THE END OF A CONDUIT OR PIPE WHICH OF NECESSITY INCLUDES A COUPLING OR ADAPTOR JOINT (E) FOR FURTHER EXTENSION OF LENGTH AND ROUTE OF SUCH A CONDUIT.

A FURTHER DEVELOPMENT OF THE SPACEMAKER DEVICE IS THE USE AND CONSTRUCTION OF MULTISIZE BOXES AND BOX OUTS (F) MANUFACTURED FROM PLASTIC OR OTHER MATERIAL AND USED TO CREATE SPACE AROUND A CONDUIT OR PIPE REQUIRED TO BE ROUTED AND TERMINATED WITHIN WALLS, SLABS AND STRUCTURES FOR SUBSEQUENT LOCATION OF RECESSED OR FLUSH MOUNTED PROPRIETARY ELECTRICAL OR OTHER BOXES.

THESE BOXES AND BOXOUTS (F) ARE DESCRIBED IN FIGURE NUMBERS 3 AND 4, THE SIMILARITY OF THESE BEING THE USE OF RECTANGULAR OR SQUARE PLASTIC OR OTHER MATERIAL BOXES HAVING PREFORMED CUTOUTS (G) OR KNOCKOUTS (G) TO ACCOMMODATE THE LOCATION OF CONDUITS AND OR COUPLING ADAPTOR JOINTS.  ALSO THERE IS AN OPTIONAL LID (H) TO PREVENT INGRESS OF CONCRETE OR OTHER MATERIAL DURING FORMATION OF THE WALL, SLAB OR STRUCTURE.

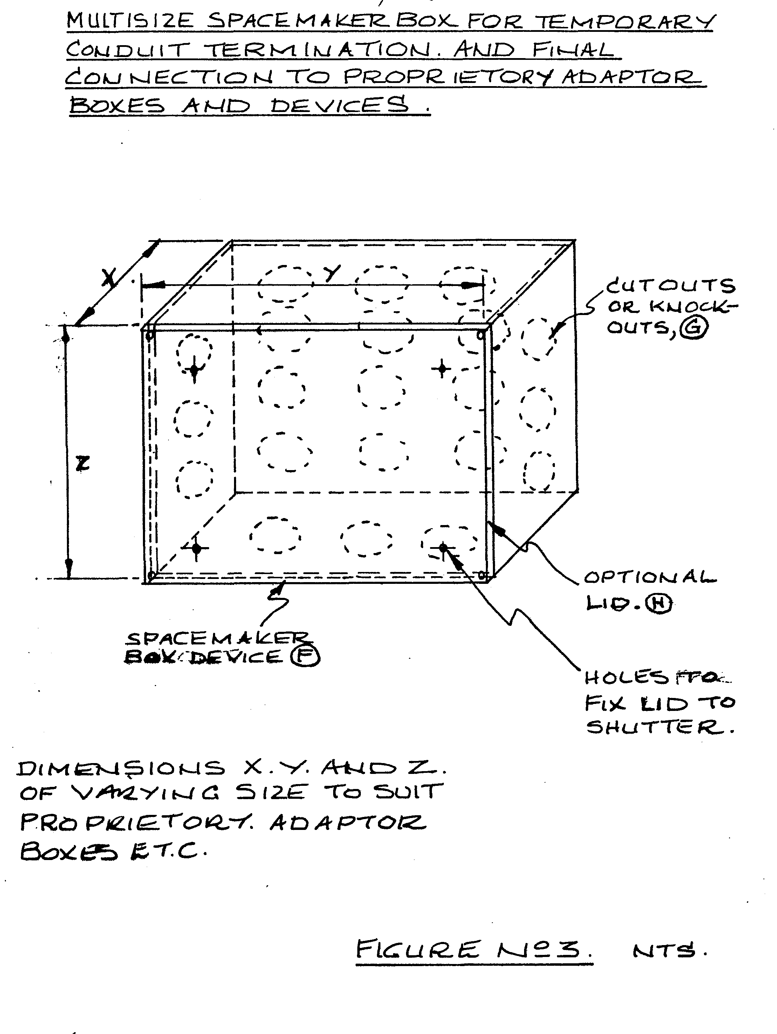

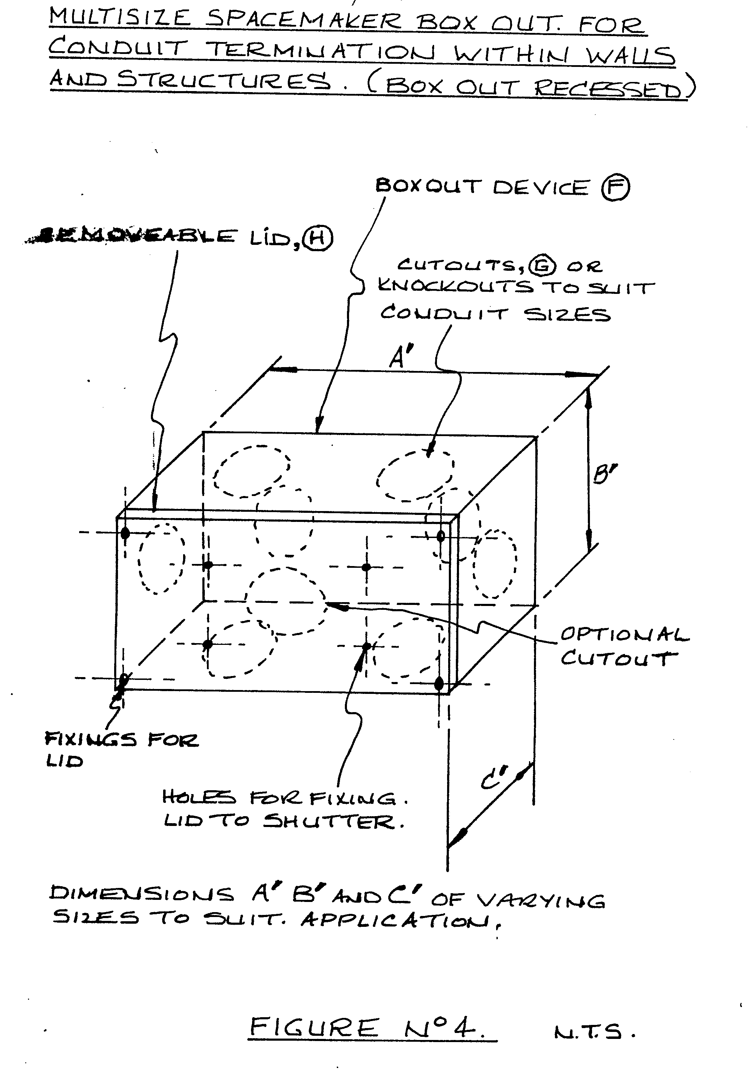

THE    DISSIMILARITY IS THAT THE BOXES (FIGURE NO. 3) ARE FORMED SPECIFICALLY TO SUIT STANDARD PROPRIETARY ELECTRICAL BOXES WHEREAS BOXES SHOWN IN FIGURE NO. 4 PRESUMES PROPRIETARY BOXES ARE LOCATED SEPARATELY WITH THE PLASTIC BOX MERELY FORMING A SPACE FOR SUBSEQUENT PULLING, LOOPING, AND FINAL CONNECTION OF CABLES AND WIRES TO ELECTRICAL UNITS TERMINALS AND DEVICES.

WHAT I CLAIM IS:-

1.   A DEVICE CONSTRUCTED SO AS TO FORM A SPACE WITHIN WALLS, SLABS OR STRUCTURES UNDER CONSTRUCTION AND AROUND CONDUIT OR PIPE  ROUTED WITHIN SUCH STRUCTURES AND REQUIRED TO TER-MINATE EITHER PERMANENTLY OR TEMPORARILY ADJACET TO SHUTTER  OR FORMWORK.

2.   A DEVICE AS CLAIMED IN CLAIM NO.1 WHICH PROTECTS THE CONDUIT OR PIPE FROM PHYSICAL DAMAGE ON REMOVAL OF THE SHUTTER OR FORMWORK AND PRECLUDES THE NEED FOR THE CONDUIT OR PIPE TO PENETRATE THE SHUTTER.

3.   I CLAIM A DEVICE AS CLAIMED IN ANY PRECEDING CLAIM WHICH PROVIDES CORRECT POSITIONING OF THE PIPE OR CONDUIT AND SECURING OF SAME DURING CONSTRUCTION OF STRUCTURES.

4.   I CLAIM A DEVICE AS HEREINBEFORE DESCRIBED WITH REFERENCE TO THE ACCOMPANYING DRAWINGS.

M.E. BENSON

SECTION OF WOODEN OR
METAL SHUTTERING. ©

PLAIN OR SCREWED
END ELECTRICAL
CONDUIT. Ⓑ

TEMPORARY FIXING
SCREW. Ⓓ

PLASTIC
SPACEMAKER
DEVICE. Ⓐ

SECTION OF REINFORCED
CONCRETE WALL OR SLAB.

FIGURE Nº1.    N.T.S.

SECTION OF WOODEN OR
METAL SHUTTERING. Ⓒ

PLAIN OR SCREWED END
ELECTRICAL CONDUIT Ⓑ
COMPLETE WITH PRO-
PRIETORY. ADAPTOR
OR COUPLING JOINT. Ⓔ

TEMPORARY FIXING.
SCREW. Ⓓ

PLASTIC
SPACEMAKER
DEVICE. Ⓐ

SECTION OF REINFORCED
CONCRETE WALL OR SLAB.

FIGURE Nº 2.          N.T.S.

MULTISIZE SPACEMAKER BOX FOR TEMPORARY
CONDUIT TERMINATION. AND FINAL
CONNECTION TO PROPRIETORY ADAPTOR
BOXES AND DEVICES.

CUTOUTS
OR KNOCK-
OUTS, G

OPTIONAL
LID. H

SPACEMAKER
BOX DEVICE F

HOLES TO
FIX LID TO
SHUTTER.

DIMENSIONS X.Y. AND Z.
OF VARYING SIZE TO SUIT
PROPRIETORY. ADAPTOR
BOXES ET.C.

FIGURE N°3.  NTS.

C083381

# MULTISIZE SPACEMAKER BOX OUT. FOR CONDUIT TERMINATION WITHIN WALLS AND STRUCTURES. (BOX OUT RECESSED)

BOXOUT DEVICE Ⓕ

REMOVEABLE LID, Ⓗ

CUTOUTS, Ⓖ OR
KNOCKOUTS TO SUIT
CONDUIT SIZES

A'

B'

OPTIONAL
CUTOUT

FIXINGS FOR
LID

C'

HOLES FOR FIXING.
LID TO SHUTTER.

DIMENSIONS A' B' AND C' OF VARYING
SIZES TO SUIT. APPLICATION,

FIGURE N°4.    N.T.S.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | H 02 G 3/12 |
| X,Y | CH-A- 400 278 (SCHÖNBÄCHLER)<br>*Page 1, lines 1-35; figures 2,4,5* | 1-4 | |
| | --- | | |
| X | US-A-3 175 724 (FIEDLER)<br>*Column 1, lines 9-44; column 2, lines 3-10,68-71; column 3, lines 1-3; figures 1,2* | 1-4 | |
| | --- | | |
| X | FR-A-1 593 689 (C.G.E)<br>*Page 3, lines 35-44; page 4, lines 11,12; figures 1,2* | 1-4 | |
| | --- | | |
| Y | FR-A-2 269 407 (BASSANI)<br>*Page 7, lines 1-7; figures 1,2* | 1,3,4 | |
| | --- | | TECHNICAL FIELDS SEARCHED (Int. Cl. ³) |
| E | GB-A-2 077 340 (BENSON)<br>*Page 1, lines 88-104; figures 1-4* | 1-4 | H 02 G 3/00<br>H 02 G 1/00 |
| | ----- | | |

The present search report has been drawn up for all claims

| Place of search<br>THE HAGUE | Date of completion of the search<br>06-01-1983 | Examiner<br>TIELEMANS H.L.A. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82